# EUROPEAN PATENT SPECIFICATION

(11) **EP 1 172 256 B1**
(45) Date of publication and mention of the grant of the patent: **21.09.2005**
(21) Application number: 01850117.1
(22) Date of filing: 03.07.2001
(51) Int. Cl.: B60Q 5/00, B60R 21/20

(54) **Airbag assembly module and method for assembly thereof**
Airbagmodul und Verfahren zu seiner Montage
Module à coussin gonflable et procédé de son assemblage

(30) Priority: 14.07.2000 SE 0026625
(43) Date of publication of application: 16.01.2002
(73) Proprietor: Volvo Personvagnar AB, 405 31 Göteborg (SE)
(72) Inventor: Gras Tous, Luis, 280 43 Madrid (ES); Landén, Joakim, 414 57 Göteborg (SE)
(74) Representative: Mossmark, Anders Lennart

(56) References cited:
- DE-A- 3 619 937
- US-A- 5 403 981
- PATENT ABSTRACTS OF JAPAN vol. 1997, no. 05, 30 May 1997 (1997-05-30) -& JP 09 024840 A (NIPPON PLAST CO LTD), 28 January 1997 (1997-01-28)

## Description

### TECHNICAL SPHERE

The invention relates to an assembly module, comprising an airbag module and at least two modules for electrical operating controls, and a method for the assembly thereof.

### PRIOR ART

Modules for the assembly of crash cushions, so-called airbag modules, are already widely known, being disclosed by US-A-5 755 458 or US-A-5 149 127, for example. This type of module generally comprises a crash cushion fitted in a console, which is used in connection with the assembly of horn switches between the console and the steering wheel hub. One problem with such modules is that the electrical connections for the airbag module protrude up through the steering wheel hub and may be difficult to connect, whilst at the same time there is a risk of the wiring getting trapped and damaged when assembling and dismantling the airbag module.

Another problem that occurs in connection with this type of module is the difficulty of obtaining the correct fit between steering wheel, airbag module and switch arrays for operating peripheral equipment. The switch arrays themselves may also be designed as modules, which according to known solutions are fitted directly to the steering wheel. Such a solution is known from the closest prior art document US 5 403 981. This means that a poor fit is achieved between the said modules and the airbag module, and that the wiring for the modules is difficult to assemble and risks being damaged or trapped when assembling the airbag module. Since the human eye is sensitive to non-centred parts, a customer may take a negative view of even very slight deviations. A precise fit is therefore desirable.

A further problem is that such an assembly solution very often means that only the airbag module can be used for operation of the horn. In a stressed situation the driver must remember that the switch array does not have this function. Since the switch array generally extends from the steering wheel rim and a distance on to the steering wheel spokes, the driver must take one hand entirely or partially off the steering wheel in order to be able to exert pressure on the airbag module.

### DESCRIPTION OF THE INVENTION

The object of the invention is to provide an assembly module, which on the one hand facilitates assembly and dismantling of the airbag module and modules for various operating controls, and on the other simplifies the fitting between the various modules and between the assembly module and the steering wheel hub. This object is achieved by an assembly module according to Claim 1.

An assembly module according to the invention comprises a console intended to be fitted in a steering wheel hub, the console being provided with fixing devices for an airbag module. The console also comprises fixing devices for at least two modules for electrical operating controls, and the airbag module and the modules for operating controls are provided with interacting first guides. Normally one module for operating controls, for controlling the car stereo system, telephone and navigation equipment, for example, is fitted on each side of the airbag module. It is also possible, however, to fit two such modules on each side, or alternatively one on each side and one at the bottom edge of the airbag module, depending partly on the design of the steering wheel hub and partly on the desired requirement for remote control of various electrical equipment from the steering wheel.

The modules for electrical operating controls are separately replaceable. It is therefore easy to replace damaged modules or to upgrade one or more modules with further or new functions. The electrical connections can either be connected manually by joining the contacts together by hand when assembling, or automatically by automatically joining the module contacts together with corresponding connections when it is pushed into place when fitting to the console.

The airbag module is provided with a number of other guides, which fit through the console in order to interact with corresponding guides in the steering wheel hub and in order to be able to centre the assembly module in relation to the steering wheel hub. The console is therefore flexibly mounted in the steering wheel hub, in order to permit centring by the airbag module. The electrical connections of the airbag module can be made in the same way as for the modules for operating controls.

The console also constitutes protection for electrical wiring in the steering wheel hub. Placing it between the steering wheel hub and the airbag module and other modules minimizes the risk of wiring being damaged when fitting or removing the modules. If the connections for the modules are joined automatically by means of contacts that are pushed into one another, the length of the wiring can be minimized. In order to facilitate fitting and removal of the modules yet further, all fixings consist of snap fasteners.

One safety feature is that all modules forming part of the assembly module are connected by way of the console to one or more horn switches in the steering wheel hub. In a stressed situation, therefore, the driver does not need to search for a particular button or press a specific part of the steering wheel, such as the airbag module, since actuation of any part of the assembly module surface can activate the horn. It is important in this context to balance the force that is required for operation of the modules for other electrical equipment against the force required to activate the horn. It must be possible to operate the switch arrays on any of the modules by applying significantly less pressure than is required for activation of the horn switch.

The invention also relates to a method for assembly of an assembly module according to Claim 1. The method comprises the following stages:
- a console is fixed in the steering wheel hub;
- at least two modules for operating controls provided with a number of guides are pushed into corresponding, interacting guide grooves in the console and fixed therein in conjunction with its fixing in the steering wheel hub;
- an airbag module provided with a number of further guides is pushed into corresponding, interacting guide grooves in the modules for operating controls, so that the said modules are centred in relation to the airbag module, the airbag module being fixed in the console.

The modules for operating controls are fixed to the console after this has been fitted in the steering wheel hub, the electrical connections being joined together automatically. Alternatively the modules for operating controls can be fixed to the console before this is fitted in the steering wheel hub. The electrical connections can in this case be connected up just before the console is fitted. In the same way the airbag module can be connected up at the time of assembly by automatic connection or manually joining together by way of an opening in the console that provides access to the leads situated behind. It is nevertheless desirable that the modules be replaceable without having to dismantle the console.

By means of the invention the modules for operating controls will be guided in correctly and will provide a better fit and centring between the said modules and the airbag module. Various parts of the assembly module are obviously dismantled in reverse order.

### DESCRIPTION OF FIGURES

- Figure 1: shows an exploded diagram containing a steering wheel and the constituent parts of the assembly module;
- Figure 2: shows a console with modules for operating controls fitted;
- Figure 3: shows a steering wheel with console according to Figure 2 fitted, together with an airbag module for fitting in the console;
- Figure 4: shows a steering wheel with a ready-assembled module according to the invention.

### PREFERRED EMBODIMENTS

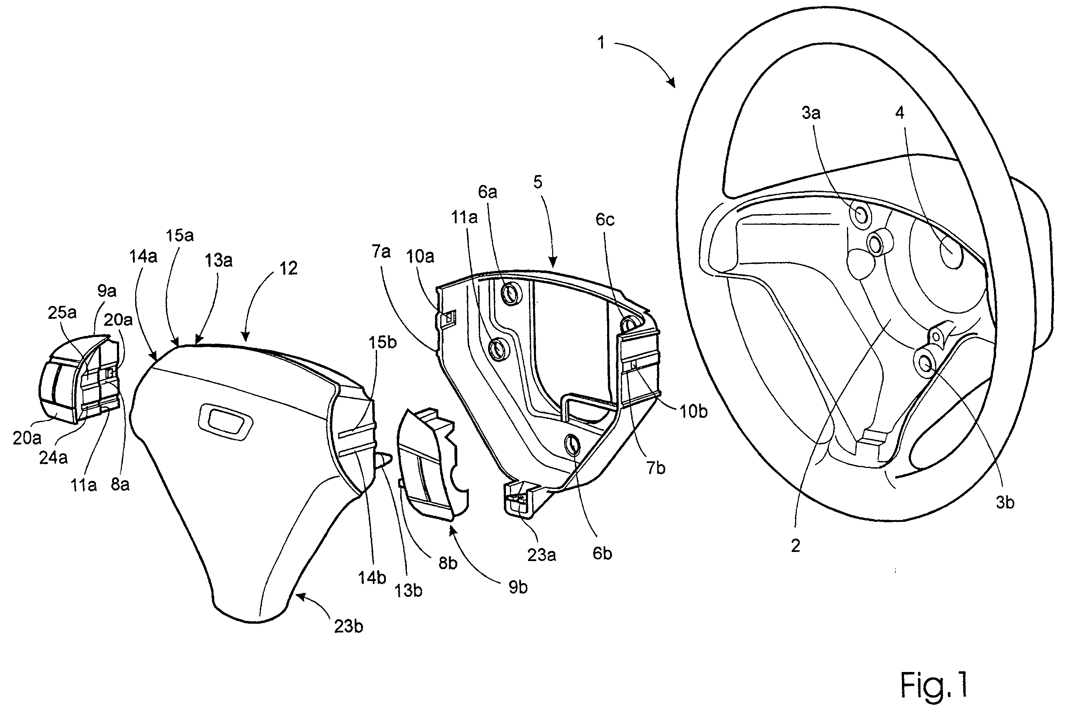

Figure 1 shows an embodiment according to the invention comprising a steering wheel 1 with a steering wheel hub 2, into which a number of modules 9a, 9b, 12 are to be fitted. The steering wheel hub has a lead-through bushing 4 for electrical cables (not shown) for the said modules, and a number of fixing points 3a, 3b, 3c (fixing point 3c is obscured in Figure 1) for a console 5. The console 5 comprises an end surface facing the steering wheel hub and provided with a number of notches 6a, 6b, 6c, and having a wall standing essentially at right angles to the end surface around its periphery. The said notches 6a, 6b, 6c interact with a corresponding number of fixing elements (not shown) for fitting the console 5 to the fixing points 3a, 3b, 3c. The fixing elements that are used for fitting the console 5 in the steering wheel hub 2 also constitute horn switches. The horn can be activated by pressing on the console 5 or on any of its constituent modules. After fitting the modules the electrical wiring will lie protected between the steering wheel hub 2 and the console 5.

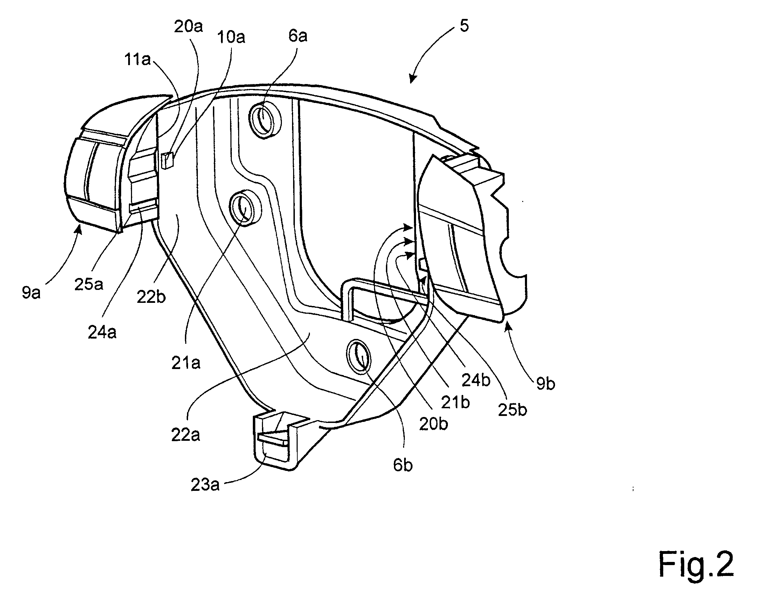

Electrical connection of all constituent modules 9a, 9b 12 can in this case be made either immediately before each module is fitted, by manually joining the electrical contacts together, or automatically when fitting by pushing interacting contacts into one another when each module is pushed into place. In the latter case contacts can preferably be fitted to the console 5 in connection with the positions occupied by the modules. The console 5 can also then be connected to the wiring, manually through a notch in the end surface 22a of the console 5 (Figure 2) or automatically when assembling by means of contacts in the steering wheel hub 2.

The console 5 has a peripheral wall 22b essentially at right angles to its end surface 22a. Along the outer sides of a pair of opposing sections of the said wall 22b, the console 5 has first guide grooves 7a, 7b for interaction with corresponding first guides 8a, 8b on the sides of a pair of modules 9a, 9b for operating controls facing the console. These modules 9a, 9b are positioned and pushed into place with the aid of the said first guide grooves 7a, 7b and guides 8a, 8b, and are locked in position by means of fixing elements 20a, 20b (Figure 2) in a pair of notches 10a, 10b in the wall 22b of the console 5. In order to achieve correct positioning, the modules 9a, 9b are provided with at least one stop 11 a, 11 b, which comes into contact with the edge of the wall 22b of the console 5 at the same time as the fixing elements 20a, 20b engage in the notches 10a, 10b in the console 5. The modules 9a, 9b can be fitted to the console 5 before or after it is fitted to the steering wheel hub 2. Different ways of connecting up the electrical connections (not shown) of the modules 9a, 9b have been described above.

In addition to the aforementioned fixing elements, the modules can also be held in place by further interacting guides and guide grooves of known design, such as opposing U-shaped grooves on the console and tongues on the modules matching the former. The aforementioned fixing elements preferably comprise snap fasteners or some other type of quick-coupling.

As will be seen from Figure 2, both the console 5 and the modules 9a, 9b for operating controls are in addition provided with further, second guide grooves and guides. The console 5 is provided with guides in the form of further notches 21 a, 21 b, in its end surface 22a facing the steering wheel hub 2. The modules 9a, 9b have further, second guide grooves 24a, 24b; 25a, 25b in their sides facing the console 5. The said second guide grooves 24a, 24b; 25a, 25b are separate from the first guides 8a, 8b, which interact with the console 5 in the assembly direction of the modules.

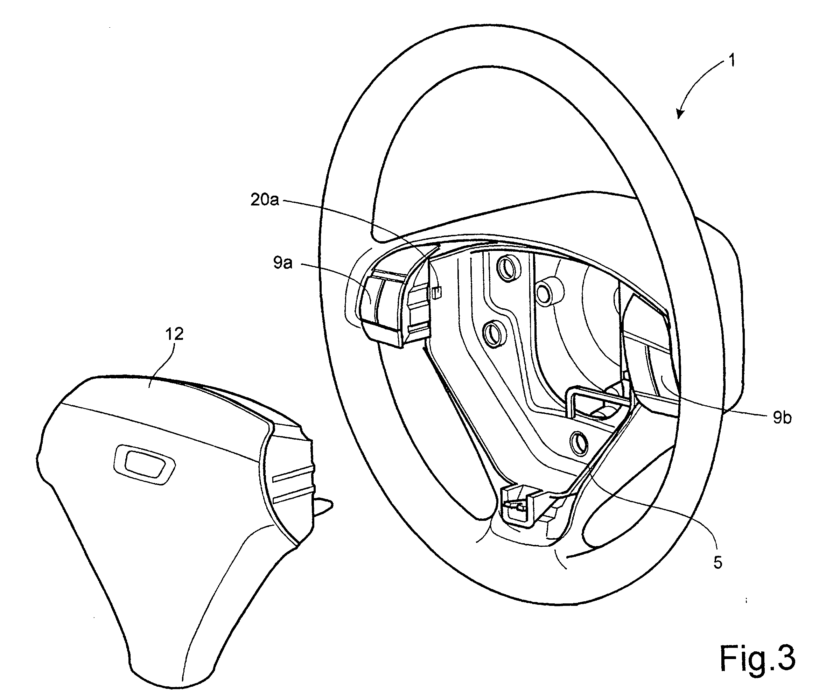

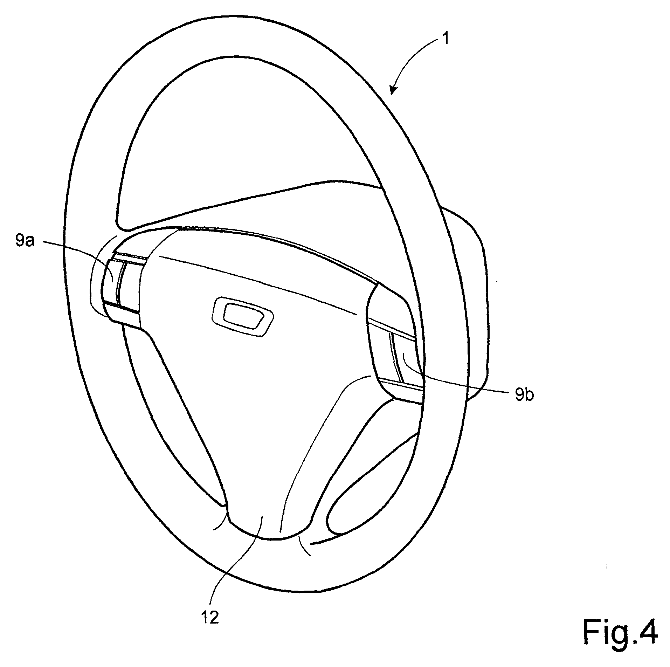

An airbag module 12 is provided with guides 13a, 13b and 14a, 14b; 15a, 15b respectively, which interact with corresponding notches 21 a, 21 b in the console 5 and guide grooves 24a; 24b; 25a, 25b respectively on the modules 9a, 9b for operating controls. Figure 3 shows a steering wheel 1 with the console 5 and the modules 9a, 9b for operating controls fitted and ready to receive the airbag module 12. When fitting the airbag module 12 the guides 14a, 14b; 15a, 15b (Figure 1) engage in the guide grooves 24a, 24b; 25a, 25b on the modules 9a, 9b for operating controls, the airbag module 12 being guided in and centred in relation to both of the said modules 9a, 9b. When the airbag module 12 has been pushed in to a certain extent a pair of guides 13a, 13b on the end surface of the module facing the hub will come into contact with their corresponding notches 21 a, 21 b in the end surface 22a of the console 5. The airbag module 12 will then be guided in and centred in relation to the console 5 and the steering wheel hub 2. The guides 13a, 13b of the airbag module also constitute fixing devices, which preferably fix the airbag module 12 to the console 5 by means of snap fasteners. In this way both the position of the assembly module 5, 9a, 9b, 12 relative to the steering wheel hub 2 and the reciprocal fit in relation to the airbag module 12 and the modules 9a, 9b for operating controls is ensured. A steering wheel with the complete assembly module in place is shown in Figure 4.

The embodiment according to Figure 1 shows an assembly module with two separate modules for operating controls. Depending on the design of the steering wheel, such as the number of spokes and the number of functions required, it is naturally possible to produce a solution with multiple such modules. It is feasible, for example, to fit four modules in pairs, on a steering wheel according to Figure 1, or to locate one module on each steering wheel spoke of a steering wheel with two or more spokes. The determining feature of the invention is that all modules for operating controls are fitted around the periphery of the console, the centring and fitting of the modules in relation to the steering wheel being guided in by means of interacting guides and guide grooves when fitting the airbag module.

## Claims

1. An assembly module intended for a steering wheel in a vehicle comprising a console (5) intended to be fitted in a steering wheel hub (2) of the said steering wheel, the console (5) being provided with a number of notches (21a, 21b) for fixing of an airbag module (12) provided with a corresponding number of fixing elements (13a, 13b), **characterized in that** a number of modules (9a, 9b) for operating controls are on the one hand fixed to the console (5) in connection with the said airbag module (12), and on the other hand are detachably joined to the airbag module (12) via interacting guides (8a, 8b) on the control modules (9a, 9b) and guide grooves (7a, 7b) on the airbag module (12).

2. The assembly module according to Claim 1, **characterized in that** the console (5) comprises guide grooves (7a, 7b) for interaction with fixing elements (8a, 8b; 20a, 20b) on at least two modules (9a, 9b) for operating controls, and that the airbag module (12) and the modules (9a, 9b) for operating controls are provided with interacting further guides and guide grooves (14a, 14b; 15a, 15b; 24a, 24b; 25a, 25b).

3. The assembly module according to Claim 1 or 2, **characterized in that** the console (5) comprises an end surface (22a) facing the steering wheel hub and a wall (22b) standing essentially at right angles to the end surface around its periphery.

4. The assembly module according to Claim 3, **characterized in that** the modules (9a, 9b) for operating controls are fixed to the outer side of the wall (22b) of the console (5).

5. The assembly module according to Claim 3 or 4, **characterized in that** the airbag module (12) is fixed in the end surface (22a) of the console (5).

6. The assembly module according to any of the preceding claims, **characterized in that** the airbag module (12) is fixed between the modules (9a, 9b) for operating controls.

7. The assembly module according to any of the preceding claims, **characterized in that** the modules (9a, 9b) for operating controls are separately replaceable.

8. The assembly module according to any of the preceding claims, **characterized in that** the operating controls (9a, 9b) comprise switch arrays for operating electrical equipment situated in the vehicle.

9. The assembly module according to any of the preceding claims, **characterized in that** the console (5) constitutes a protection for electrical wiring in the steering wheel hub.

10. The assembly module according to any of the preceding claims, **characterized in that** all constituent modules (9a, 9b, 12) of the assembly module are connected by way of the console (5) to one or more horn switches in the steering wheel hub.

11. The assembly module according to any of the preceding claims, **characterized in that** all fixing devices in the assembly module comprise snap fasteners.

12. A method for assembling an assembly module according to Claim 1, **characterized in that**
- a console (5) is fixed in the steering wheel hub (2);
- at least two modules (9a, 9b) for operating controls provided with a number of guides (8a, 8b) are pushed into corresponding, interacting guide grooves (7a, 7b) in the console (5) and fixed therein in conjunction with its fixing in the steering wheel hub;
- an airbag module (12) provided with a number of further guides (14a, 14b; 15a, 15b) is pushed into corresponding, interacting guide grooves in the modules (9a, 9b) for operating controls, so that the said modules are centred in relation to the airbag module, the airbag module (12) being fixed in the console (5).

13. The method for assembling an assembly module according to Claim 12, **characterized in that** the modules (9a, 9b) are fixed to the console (5) before fitting in the steering wheel hub (2).

14. The method for assembling an assembly module according to Claim 12, **characterized in that** the modules (9a, 9b) are fixed to the console (5) after fitting in the steering wheel hub (2).

15. The method for assembling an assembly module according to any of Claims 12 to 14, **characterized in that** all fixings comprise snap fasteners.

## Patentansprüche

1. Modulaufbau für ein Lenkrad in einem Fahrzeug, das mit einer Konsole (5) ausgestattet ist, die zum Einbau in eine Lenkradnabe (2) des Lenkrades vorgesehen ist, wobei die Konsole (5) mit einer Anzahl von Aussparungen (21a, 21b) zum Befestigen eines Airbagmoduls (12), das eine entsprechende Anzahl von Befestigungselementen (13a, 13b) aufweist, ausgestattet ist, **dadurch gekennzeichnet, dass** eine Anzahl von Modulen (9a, 9b) für Bedienungselemente einerseits an der Konsole (5) in Verbindung mit dem Airbagmodul (12) befestigt sind, und andererseits lösbar mit dem Airbagmodul (12) durch zusammenwirkende Führungen (8a, 8b) an den Kontrollmodulen (9a, 9b) und Führungsnuten (7a, 7b) an dem Airbagmodul (12) verbunden sind.

2. Modulaufbau nach Anspruch 1, **dadurch gekennzeichnet, dass** die Konsole (5) Führungsnuten (7a, 7b) zum Zusammenwirken mit Befestigungselementen (8a, 8b, 20a, 20b) an mindestens zwei Modulen (9a, 9b) für Bedienelemente aufweist, und dass das Airbagmodul (12) und die Module (9a, 9b) für Bedienelemente mit zusammenwirkenden weiteren Führungen und Führungsnuten (14a, 14b, 15a, 15b, 24a, 24b, 25a, 25b) ausgestattet sind.

3. Modulaufbau nach Anspruch 1 oder 2, **dadurch gekennzeichnet, dass** die Konsole (5) eine Endfläche (22a) gegenüber der Lenkradnabe und eine Wand (22b) aufweist, die im Wesentlichen rechtwinklig zu der Endfläche um deren Umfang steht.

4. Modulaufbau nach Anspruch 3, **dadurch gekennzeichnet, dass** die Module (9a, 9b) für Bedienelemente an der Aussenseite der Wand (22b) der Konsole (5) befestigt sind.

5. Modulaufbau nach Anspruch 3 oder 4, **dadurch gekennzeichnet, dass** das Airbagmodul (12) an der Endoberfläche (22a) der Konsole (5) befestigt ist.

6. Modulaufbau nach jedem der vorhergehenden Ansprüche, **dadurch gekennzeichnet, dass** das Airbagmodul (12) zwischen den Modulen (9a, 9b) für Bedienelemente befestigt ist.

7. Modulaüfbau nach jedem der vorhergehenden Ansprüche, **dadurch gekennzeichnet, dass** die Module (9a, 9b) für Bedienelemente einzeln ersetzbar sind.

8. Modulaufbau nach jedem der vorhergehenden Ansprüche, **dadurch gekennzeichnet, dass** die Bedienelemente (9a, 9b) Schalteranordnungen zum Bedienen von elektrischen Geräten im Fahrzeug aufweisen.

9. Modulaufbau nach jedem der vorhergehenden Ansprüche, **dadurch gekennzeichnet, dass** die Konsole (5) einen Schutz für elektrische Verkabelung in der Lenkradnabe bildet.

10. Modulaufbau nach jedem der vorhergehenden Ansprüche, **dadurch gekennzeichnet, dass** alle Module (9a, 9b, 12), die Bestandteil der Modulaufbau sind, durch die Konsole (5) zu einem oder mehreren Hupenschaltern in der Lenkradnabe verbunden sind.

11. Modulaufbau nach jedem der vorhergehenden Ansprüche, **dadurch gekennzeichnet, dass** alle Befestigungsvorrichtungen des Modulaufbaus Schnappverbindungen aufweisen.

12. Verfahren zum Zusammenbau eines Modulaufbaus nach Anspruch 1,
**dadurch gekennzeichnet, dass**
- eine Konsole (5) mit der Lenkradnabe (2) verbunden wird;
- mindestens zwei Module (9a, 9b) für Bedienelemente, die mit einer Anzahl von Führungen (8a, 8b) ausgestattet sind, in entsprechende, zusammenwirkende Führungsnuten (7a, 7b) in der Konsole (5) geschoben, und darin in Verbindung mit ihrer Befestigung in der Lenkradnabe befestigt werden;
- ein Airbagmodul (12), das mit einer Anzahl von weiteren Führungen (14a, 14b, 15a, 15b) ausgestattet ist, wird in die entsprechenden interagierenden Führungsnuten in den Modulen (9a, 9b) für Bedienelemente so geschoben, dass die Module bezüglich des Airbagmoduls zentriert werden, wenn das Airbagmodul (12) in der Konsole befestigt wird.

13. Verfahren für den Zusammenbau eines Modulaufbaus nach Anspruch 12, **dadurch gekennzeichnet, dass** die Module (9a, 9b) an der Konsole (5) befestigt werden, bevor sie in die Lenkradnabe (2) eingesetzt werden.

14. Verfahren für den Zusammenbau eines Modulaufbaus nach Anspruch 12, **dadurch gekennzeichnet, dass** die Module (9a, 9b) an der Konsole (5) nach dem Einsetzen in die Lenkradnabe (2) befestigt werden.

15. Verfahren für den Zusammenbau eines Modulaufbaus nach einem der Ansprüche 12 bis 14, **dadurch gekennzeichnet, dass** alle Befestigungen Schnappverbindungen aufweisen.

## Revendications

1. Module d'assemblage prévu pour un volant de direction dans un véhicule comportant une console (5) prévue pour être insérée dans un moyeu de volant de direction (2) dudit volant de direction, la console (5) étant munie de plusieurs encoches (21a, 21b) pour une fixation d'un module de coussin d'air (12) muni d'un nombre correspondant d'éléments de fixation (13a, 13b), **caractérisé en ce que** plusieurs modules (9a, 9b) pour des commandes de fonctionnement sont, d'une part, fixés sur la console (5) en liaison avec ledit module de coussin d'air (12) et sont, d'autre part, reliés de manière amovible au module de coussin d'air (12) par l'intermédiaire de guides agissant réciproquement (8a, 8b) sur les modules de commande (9a, 9b) et de rainures de guidage (7a, 7b) sur le module de coussin d'air (12).

2. Module d'assemblage selon la revendication 1, **caractérisé en ce que** la console (5) comporte des rainures de guidage (7a, 7b) pour une interaction avec des éléments de fixation (8a, 8b ; 20a, 20b) sur au moins deux modules (9a, 9b) pour des commandes de fonctionnement, et **en ce que** le module de coussin d'air (12) et les modules (9a, 9b) pour des commandes de fonctionnement sont munis de guides et de rainures de guidage supplémentaires agissant réciproquement (14a, 14b ; 15a, 15b ; 24a, 24b ; 25a, 25b).

3. Module d'assemblage selon la revendication 1 ou 2, **caractérisé en ce que** la console (5) comporte une surface d'extrémité (22a) dirigée vers le moyeu de volant de direction et une paroi (22b) située sensiblement à angles droits par rapport à la surface d'extrémité autour de sa périphérie.

4. Module d'assemblage selon la revendication 3, **caractérisé en ce que** les modules (9a, 9b) pour des commandes de fonctionnement sont fixés sur le côté extérieur de la paroi (22b) de la console (5).

5. Module d'assemblage selon la revendication 3 ou 4, **caractérisé en ce que** le module de coussin d'air (12) est fixé dans la surface d'extrémité (22a) de la console (5).

6. Module d'assemblage selon l'une quelconque des revendications précédentes, **caractérisé en ce que** le module de coussin d'air (12) est fixé entre les modules (9a, 9b) pour des commandes de fonctionnement.

7. Module d'assemblage selon l'une quelconque des revendications précédentes, **caractérisé en ce que** les modules (9a, 9b) pour des commandes de fonctionnement peuvent être remplacés séparément.

8. Module d'assemblage selon l'une quelconque des revendications précédentes, **caractérisé en ce que** les commandes de fonctionnement (9a, 9b) comportent des groupements d'interrupteurs pour actionner des équipements électriques situés dans le véhicule.

9. Module d'assemblage selon l'une quelconque des revendications précédentes, **caractérisé en ce que** la console (5) constitue une protection pour un câblage électrique dans le moyeu de volant de direction.

10. Module d'assemblage selon l'une quelconque des revendications précédentes, **caractérisé en ce que** tous les modules constituants (9a, 9b, 12) du module d'assemblage sont reliés par l'intermédiaire de la console (5) à un ou plusieurs interrupteurs d'avertisseur dans le moyeu de volant de direction.

11. Module d'assemblage selon l'une quelconque des revendications précédentes, **caractérisé en ce que** tous les dispositifs de fixation dans le module d'assemblage comportent des boutons à pression.

12. Procédé pour assembler un module d'assemblage selon la revendication 1, **caractérisé en ce que**
- une console (5) est fixée dans le moyeu de volant de direction (2),
- au moins deux modules (9a, 9b) pour des commandes de fonctionnement munis de plusieurs guides (8a, 8b) sont poussés dans des rainures de guidage correspondantes, agissant réciproquement (7a, 7b) dans la console (5) et sont fixés dans celle-ci conjointement à sa fixation dans le moyeu de volant de direction,
- un module de coussin d'air (12) muni de plusieurs guides supplémentaires (14a, 14b ; 15a, 15b) est poussé dans des rainures de guidage correspondantes, agissant réciproquement dans les modules (9a, 9b) pour des commandes de fonctionnement, de sorte que lesdits modules sont centrés par rapport au module de coussin d'air, le module de coussin d'air (12) étant fixé dans la console (5).

13. Procédé pour assembler un module d'assemblage selon la revendication 12, **caractérisé en ce que** les modules (9a, 9b) sont fixés sur la console (5) avant une insertion dans le moyeu de volant de direction (2).

14. Procédé pour assembler un module d'assemblage selon la revendication 12, **caractérisé en ce que** les modules (9a, 9b) sont fixés sur la console (5) après une insertion dans le moyeu de volant de direction (2).

15. Procédé pour assembler un module d'assemblage selon l'une quelconque des revendications 12 à 14, **caractérisé en ce que** toutes les fixations comportent des boutons à pression.
